# EUROPÄISCHE PATENTSCHRIFT

(11) **EP 0 864 035 B1**
(45) Veröffentlichungstag und Bekanntmachung des Hinweises auf die Patenterteilung: **28.06.2000**
(21) Anmeldenummer: 96939746.2
(22) Anmeldetag: 28.11.1996
(51) Int. Cl.: F02B 33/42, F04F 11/02

(54) **AUFLADEEINRICHTUNG FÜR DIE LADELUFT EINER VERBRENNUNGSKRAFTMASCHINE**
SUPERCHARGING ARRANGEMENT FOR THE CHARGE AIR OF AN INTERNAL COMBUSTION ENGINE
DISPOSITIF DE SURALIMENTATION EN AIR D'UN MOTEUR A COMBUSTION INTERNE

(30) Priorität: 30.11.1995 AT 196095
(43) Veröffentlichungstag der Anmeldung: 16.09.1998
(73) Patentinhaber: Blank, Otto, 4400 Steyr (AT); Buha, Gerald, 4400 Steyr (AT); Mayer, Andreas, 5443 Niederrohrdorf (CH)
(72) Erfinder: Blank, Otto, 4400 Steyr (AT); Buha, Gerald, 4400 Steyr (AT); Mayer, Andreas, 5443 Niederrohrdorf (CH)
(74) Vertreter: Babeluk, Michael, Dipl.-Ing. Mag.
(86) Internationale Anmeldenummer: AT9600236
(87) Internationale Veröffentlichungsnummer: WO9720134

(56) Entgegenhaltungen:
- EP-A- 0 028 035
- EP-A- 0 143 956
- EP-A- 0 151 407
- EP-A- 0 235 609
- DE-A- 2 633 568
- DE-A- 2 844 287
- FR-A- 2 370 860
- GB-A- 2 065 232
- US-A- 3 011 487
- PATENT ABSTRACTS OF JAPAN vol. 013, no. 257 (M-837), 14.Juni 1989 & JP 01 060717 A (MASASHI HARADA), 7.März 1989,
- PATENT ABSTRACTS OF JAPAN vol. 011, no. 247 (M-615), 12.August 1987 & JP 62 055418 A (MAZDA MOTOR CORP), 11.März 1987,
- PATENT ABSTRACTS OF JAPAN vol. 011, no. 318 (M-632), 16.Oktober 1987 & JP 62 101850 A (MAZDA MOTOR CORP), 12.Mai 1987,
- PATENT ABSTRACTS OF JAPAN vol. 015, no. 168 (M-1107), 26.April 1991 & JP 03 033432 A (MAZDA MOTOR CORP), 13.Februar 1991,

## Beschreibung

Die Erfindung betrifft eine Aufladeeinrichtung für die Ladeluft einer Verbrennungskraftmaschine, wie sie im Oberbegriff des Anspruches 1 beschrieben ist.

Aus der JP 01 060 717 A ist eine Aufladeeinrichtung für die Ladeluft einer Verbrennungskraftmaschine, insbesondere eines Kolbenmotors bekannt, welche als Druckwellenmaschine ausgebildet ist, die mit einer Zuluftleitung für die Ladeluft des Kolbenmotors und einer Abgasleitung für die Verbrennungsgase des Kolbenmotors strömungsverbunden ist. Die Druckwellenmaschine weist ein Gehäuse auf, welches durch ein Ladeluft-Stirngehäuse, ein Abgas-Stirngehäuse und einen diese voneinander distanzierenden Gehäuseteil gebildet ist. Das Gehäuse, insbesondere das Ladeluft-Stirngehäuse und das Abgas-Stirngehäuse, weisen Zuström- und Abströmkanäle auf. Im Gehäuse in einer Lageranordnung drehbar gelagert, befindet sich ein Zellrotor, welcher mehrere konzentrisch zueinander angeordnete Fluten aufweist und der mit einem Drehantrieb verbunden ist. Im Abgas-Stirngehäuse sind in Zuströmkanälen für die Verbrennungsgase zu den Fluten Schaltorgane angeordnet. Nachteilig ist dabei, daß eine druckbeaufschlagte Flute ladeluftseitig über dieser zugeordneter Abströmkanäle und der Zuluftleitung mit Abströmkanälen strömungsverbunden ist, welche einer nicht druckbeaufschlagten Flute zugeordnet sind. Dadurch kann die über Druckwellen der Verbrennungsgase komprimierte Ladeluft bei Erreichen des Ladeluft-Stirngehäuses nicht nur in die Zuluftleitung für die Ladeluft zum Kolbenmotor eindringen, sondern auch in die anderen Fluten, welche beispielsweise nicht mit Druckwellen beaufschlagt werden. Dies bewirkt einen unerwünschten Druckverlust und damit eine Reduzierung des Wirkungsgrades der Druckwellenmaschine und in weiterer Folge auch zu einer schlechten Regelbarkeit des Druckwellenprozesses.

Aus der JP 62 101 850 A ist eine Aufladeeinrichtung für die Ladeluft einer Verbrennungskraftmaschine bekannt, welche zwischen einer Zuluftleitung für die Ladeluft und einer Abgasleitung für die Verbrennungsgase strömungsverbunden angeordnet ist. Sie ist als Druckwellenmaschine ausgebildet und weist einen Zellrotor auf. Die Zuluftleitung für die Ladeluft weist hochdruckscitig ein Schaltorgan auf, mittels welchem der Zuluftstrom zur Verbrennungskraftmaschine verändert werden kann. Nachteilig ist bei dieser Ausführung, daß ebenfalls im Fall des Einsatzes eines Zellrotors mit mehreren konzentrisch zueinander angeordneten Fluten nicht verhindert wird, daß komprimierte Ladeluft aus einer in Betrieb befindlichen, d. h. mit Druckwellen beaufschlagten Flute in eine andere, nicht in Betrieb befindliche Flute geleitet wird. Dadurch kommt es, wie oben beschrieben, zu einem unerwünschten Druckverlust.

In den GB 2 065 232 A und US 3 011 487 A wird ein Winkelversatz von Einlaß- und Auslaßöffnungen in Abgas-Stirngehäusen und Ladeluft-Stirngehäusen beschrieben, wobei dieser Winkelversatz der Drehzahl der Verbrennungskraftmaschine angepaßt werden kann.

Aus der DE 26 33 568 C2 ist eine Einrichtung zur Hochaufladung eines Verbrennungsmotors bekannt, bei der ein Abgasturbolader mit der gasdynamischen Druckwellenmaschine, die abgasseitig und luftseitig in Serie geschaltet sind und eine Versorgung des Verbrennungsmotors mit Frischluft in zwei Stufen bewirkt. Dabei wird der Abgasturbolader für die Hochdruckstufe und die Druckwellenmaschine für die Niederdruckstufe eingesetzt. Bei dieser bekannten Einrichtung ist weiters auch eine Zwischenerhitzung des Abgases vor dessen Zuführung zur Druckwellenmaschine vorgesehen. Diese Einrichtung erfordert einen hohen technischen Aufwand, wodurch deren Einsatz im kleinen und mittleren Leistungsspektrum von Verbrennungsmotoren nicht zweckmäßig ist.

Aus der DE 28 44 287 C2 ist eine mehrflutige, gasdynamische Druckwellenmaschine bekannt, die einen Zellenrotor aufweist, der im Gehäuse über eine Antriebsachse drehbar gelagert ist, und der Antrieb des Zellenrotors über einen Riementrieb über die Kurbelwelle der Verbrennungskraftmaschine erfolgt. Bei einer derartigen Ausbildung ist von Nachteil, daß die Druckwellenmaschine in direkter Abhängigkeit von der Drehzahl der Verbrennungskraftmaschine betrieben wird, wodurch die Wirkungsweise der Druckwellenmaschine, insbesondere im unteren Drehzahlbereich der Verbrennungskraftmaschine gering ist und eine Regelung der Wirkungsweise durch die Abhängigkeit der Drehzahl an die Verbrennungskraftmaschine zur Erzielung eines hohen Wirkungsgrades auch im niederen Drehzahlbereich nicht möglich ist

Aus der EP 0 235 609 A1 ist ein freilaufender Druckwellenlader mit einem Rotorgehäuse und einem Zellenrotor innerhalb des Rotorgehäuses beschrieben, der achsparallel oder schräg zur Rotorachse liegende oder schraubenförmig verwundene Zellenwände aufweist und in den beiden Stirnseiten des Rotorgehäuses Zuluft- und Abgaskanäle angeordnet sind. Der Antrieb des Zellrotors erfolgt durch Beaufschlagung der Zellwände durch Hochdruckabgase, die über Gaskanäle in einem entsprechenden Beaufschlagungswinkel in das Rotorgehäuse einmünden und durch den Eintritt des Abgases der Zellrotor in Rotation versetzt wird. Dadurch werden zusätzliche Kanäle in den Stirnseitenwänden erforderlich, die eine Beeinträchtigung bei der Anordnung und Ausgestaltung der Ladeluft- und Abgaskanäle nach sich ziehen und damit die optimale Ausbildung der Ladeluft- und Abgaskanäle für eine hohe Effizienz eines Druckwellenladers nicht möglich ist.

Aus der EP 0 143 956 A1 ist eine Druckwellenmaschine mit einem Zellrotor in Gußausführung bekannt, der im Anschluß an die Herstellung einer Innenbeschichtung mit katalytischen Material zur Reduzierung der in den Abgasen enthaltenen Schadstoffen unterzogen wird. Bedingt durch die durch den Druckwellenprozeß hervorgerufene starke Turbulenz im Zellrotor kommt es zu einem innigen Kontakt zwischen dem Katalysator und dem Gas und in Verbindung mit einer Sauerstoffanreicherung durch den Kontakt mit der Sprühluft zu einer guten Oxidationswirkung und damit zur Abgasentgiftung. Nachteilig ist dabei der aufwendige Beschichtungsprozeß, der eine zusätzliche Fertigungsstufe für den Zellrotor erfordert, sowie die dabei auftretenden thermischen Belastungen des Zellrotors beim Beschichten, wodurch eine massive Ausgestaltung des Zellrotors erforderlich wird.

Aufgabe der Erfindung ist es, eine Aufladevorrichtung für eine Verbrennungskraftmaschine zu schaffen, mit der über einen möglichst großen Drehzahlbereich der Verbrennungskraftmaschine ein hoher Wirkungsgrad und damit insgesamt eine Energieeinsparung erreicht wird.

Diese Aufgabe der Erfindung wird durch die im Kennzeichenteil des Anspruches 1 wiedergegebenen Merkmale erreicht. Der überraschende Vorteil dabei ist, daß durch die Ausbildung der Druckwellenmaschine mit mehreren Verdichterregistern unabhängig von der Drehzahl der Druckwellenmaschine das Liefervolumen an verdichteter Ladeluft durch Zu- oder Abschalten von Registern an den leistungsspezifischen Bedarf der Verbrennungskraftmaschine anpaßbar ist und auch eine Zuordnung von verdichteter Ladeluft zu einzelnen oder gruppenweise versorgten Zylindern der Verbrennungskraftmaschine realisierbar ist.

Von Vorteil ist aber auch eine Ausbildung nach Anspruch 2, wodurch in Verbindung mit einer unabhängigen Drehzahlregelung der Druckwellenmaschine ein Betrieb mit Abstimmungsdrehzahl möglich ist, bei der über den gesamten von der Drehzahl der Verbrennungskraftmaschine abhängigen Bedarfsbereich ein Druckwellen-Resonanzbetrieb gegeben ist und damit ein hohes Druckniveau und hoher Verdichtungsgrad in der Verbrennungskraftmaschine erreicht wird, was zu einer hohen Energienutzung des zugeführten Betriebsmittels und damit zu einer Anhebung des Gesamtwirkungsgrades der Anlage führt.

Es ist aber auch eine Ausbildung nach Anspruch 3 vorteilhaft, weil dadurch eine andere Regelmöglichkeit und Anpassung der Leistung der Druckwellenmaschine an den drehzahlabhängigen Leistungsbedarf der Verbrennungskraftmaschine erreicht wird.

Möglich ist aber auch eine Ausbildung nach Anspruch 4, wodurch eine genügend feinstufige Anpassung des Luftdargebotes der Druckwellenmaschine an den Bedarf der Verbrennungskraftmaschine erreicht wird.

Gemäß vorteilhaften Weiterbildungen, wie im Anspruch 5 beschrieben, wird bei vergleichbarem Leistungsspektrum eine kleinere Baugröße erreicht und damit Gewicht eingespart die Anordnung an der Verbrennungskraftmaschine verbessert.

Von Vorteil sind dabei auch Ausbildungen nach den Ansprüchen 6 und 7, weil damit die einzelnen Verdichterregister der Druckwellenmaschine entsprechend dem jeweiligen Leistungsbedarf und vorgegebenen Steuerpunkten zu- bzw. abgeschaltet werden können und damit der Betrieb der Druckwellenmaschine im optimalen Leistungsspektrum angepaßt an die Verbrennungskraftmaschine erfolgt. Eine besondere Anpassung an das Leistungsspektrum ist dabei auch für die Startphase der Verbrennungskraftmaschine möglich, wie auch durch die Möglichkeit einer inneren Mehrstufigkeit, die durch die wahlweise Ansteuerung der einzelnen Verdichtregister ermöglicht wird. Vorteilhaft dabei ist auch, daß z. B. ein Verdichtregister schaltungstechnisch als sogenannte Staubremse in den Abgasstrom der Verbrennungskraftmaschine eingebunden werden kann, wobei dies durch ein separates Register oder durch entsprechende Leitungsführung und den entsprechenden schaltungstechnischen Vorkehrungen, z. B. einer Umkehrschaltung durch eines der vorhandenen Register, erfolgt.

Gemäß einer vorteilhaften Weiterbildung, wie in den Ansprüchen 8 und 9 beschrieben, wird eine steuerbare Zumischung eines Abgas-Teilstroms für die Ladeluft erreicht, mit der der Verbrennungskraftmaschine zugeführten Frischluft ein Anteil von Verbrennungsrückständen zugemischt wird, wodurch die Schadstoffemission der Verbrennungsgase reduziert und eine Verschleißminderung in der Verbrennungskraftmaschine bewirkt wird.

Von Vorteil ist aber auch eine Ausbildung nach Anspruch 10, weil damit eine durch die Temperatur der Abgase hervorgerufene Erwärmung im Ladeluftbereich des Zellrotors bzw. der Druckwellenmaschine vermieden wird.

Nach einer wie im Anspruch 11 beschriebenen, vorteilhaften Ausbildung wird ein Betrieb der Druckwellenmaschine mit Resonanzdrehzahl erreicht, wodurch diese Betriebsbedingungen hohe Druckstufen gewährleisten und die interne Rezirkulation im Zellrotor unabhängig von den Druckverhältnissen zwischen Auspuffgegendruck und Ansaugunterdruck gering ist und eine Geräuschreduktion durch eine Verlagerung der Frequenz der durch die Druckwellen verursachten Schallwellen in einen für das menschliche Ohr nicht wahrnehmbaren Frequenzbereich, erzielt wird. Weiters werden dadurch vielfach sogenannte Gastaschen in den Stirngehäusen eingespart und damit die Anordnung von bis zu drei Zyklen möglich.

Möglich ist dabei eine Ausbildung nach Anspruch 12, weil dadurch eine auf katalytischem Weg wirkende Reinigung des Abgases erreicht wird, da in den Zellen des Zellrotors durch Turbulenzen in der Strömung ein intensiver Kontakt der Abgase mit den mit katalytischen Material beschichteten Zellwänden erfolgt und der Reinigungsprozeß auch durch den Kontakt des Abgases mit der als Frischluft zugeführten Ladeluft weiter verbessert wird.

Eine weitere vorteilhafte Ausgestaltung beschreibt Anspruch 13, wodurch die Wirkung der Druckwellenmaschine bereits in der Startphase der Verbrennungskraftmaschine durch Zuführung eines externen Wärmepotentials an die Abgase gegeben ist und damit bereits in dieser Phase der Verbrennungsprozeß unter Vermeidung eines hohen Schadstoffausstoßes erfolgt.

Schließlich ist auch eine Ausbildung nach Anspruch 14 möglich, wodurch eine durch die Überkapazität der Druckwellenmaschine vorhandene, überschüssige, vorverdichtete Ladeluft als Teilstrom für eine Druckbefüllung der Druckwellenmaschine und damit zur Verbesserung des Wirkungsgrades der Druckwellenmaschine zur Verfügung steht und dieser bedarfsweise zugeführt werden kann.

Zum besseren Verständnis der Erfindung wird diese anhand der in den Figuren gezeigten Ausführungsbeispiele näher beschrieben.

Es zeigen:
- Fig. 1: eine Verbrennungskraftmaschine mit einer Aufladeeinrichtung in schematischer Darstellung bei der die vorliegende Erfindung anwendbar ist;
- Fig. 2: eine andere Ausführung der Aufladeeinrichtung für eine Verbrennungskraftmaschine in vereinfachter, schematischer Darstellung;
- Fig. 3: eine weitere Ausführung der Aufladeeinrichtung für eine Verbrennungskraftmaschine in schematisch, vereinfachter Darstellung;
- Fig. 4: die erfindungsgemäße Druckwellenmaschine in vereinfachter Darstellung, geschnitten;
- Fig. 5: die Druckwellenmaschine geschnitten, gemäß den Linien V-V in Fig. 4;
- Fig. 6: eine andere Ausführung der erfindungsgemäßen Aufladeeinrichtung für eine Verbrennungskraftmaschine in vereinfachter, schematischer Darstellung, geschnitten;
- Fig. 7: eine schematische Darstellung der erfindungsgemäßen Aufladeeinrichtung mit der Druckwellenmaschine;
- Fig. 8: eine weitere Ausführung der erfindungsgemäßen Aufladeeinrichtung in vereinfachter, schematischer Darstellung.

In der Fig. list eine Aufladeeinrichtung 1 für eine Verbrennungskraftmaschine 2, z.B. einen Kolbenmotor 3, gezeigt. Die Versorgung der Verbrennungskraftmaschine 2 mit Verbrennungsluft - gemäß Pfeil 4 - erfolgt aus der Umgebungsluft über einen Luftfilter 5 und Rohrleitungen 6, die den Luftfilter 5 mit Einlässen 7 von Zylindern 8 verbinden. Die Ableitung von Verbrennungsgasen - gemäß Pfeil 9 - erfolgt über Auslässe 10 der Zylinder 8 und Abgasleitungen 11 und letztendlich über einen Auspufftopf 12, durch den sie an die Umgebungsluft abgegeben werden.

Zwischen der Rohrleitung 6 für die Verbrennungsluft - gemäß Pfeil 4 - und der Abgasleitung 11 für das Abgas - gemäß Pfeil 9 - ist eine Druckwellenmaschine 13 angeordnet, die einen parallelen Strömungsverlauf in Art eines Bypasses zur Rohrleitung 6 für die Verbrennungsluft und Abgasleitung 11 für das Abgas ausbildet. Regelklappen 14 in der Rohrleitung 6 und der Abgasleitung 11 ermöglichen ein Zu- und Abschalten des Strömungsverlaufes der Verbrennungsluft und des Abgases über einen Zellrotor 15 der Druckwellenmaschine 13.

Die Rohrleitung 6 für die Verbrennungsluft kann im Bereich der Druckwellenmaschine 13 in Strömungsrichtung der Verbrennungsluft vor und/oder nach der Regelklappe 14 mit der Umgebungsluft strömungsverbundene Schnüffelventile aufweisen, um bei einem betriebsbedingt auftretenden Unterdruck Frischluft aus der Umgebungsluft ansaugen zu können.

Die Druckwellenmaschine 13 ist weiters mit einer Antriebsvorrichtung 16 für den Zellrotor 15 versehen, die in der gezeigten Ausführung durch einen Elektromotor 17 gebildet ist, wodurch eine von der Verbrennungskraftmaschine 2 unabhängige und entkoppelte Drehzahl erreicht wird. Der Elektromotor 17 ist über eine Leitung 18 mit einer Regeleinrichtung 19 verbunden, die einen Drehzahlregler 20 für den Elektromotor 17 aufweist und eine Auswerte- und Steuereinheit 21 umfaßt und über eine Versorgungsleitung 22 mit einer Energiequelle 23, z.B. Batterie, Generator, etc., verbunden ist. Des weiteren sind zur Erfassung verschiedener Parameter der Verbrennungskraftmaschine 2 Meßwertgeber 24 vorgesehen, z.B. ein in der Abgasleitung 11 angeordneter Thermofühler 25, die über Steuerleitungen 26 mit der Auswerte- und Steuereinheit 21 verbunden sind.

Der Elektromotor 17 wird ebenfalls über die Versorgungsleitung 22 und die Leitung 18 mit der für den Betrieb erforderlichen Energie aus der Energiequelle 23 versorgt.

Durch die von der jeweiligen Drehzahl der Verbrennungskraftmaschine 2 mittels Drehzahlregler 20 und dem Elektromotor 17 unabhängig regelbare Drehzahl der Druckwellenmaschine 13 kann für die Aufladung der Verbrennungskraftmaschine 2 mit der Verbrennungsluft, abgeleitet von Parametern, die über die Meßwertgeber 24 ermittelt werden, der für einen hohen und gleichmäßigen Leistungsbereich der Verbrennungskraftmaschine 2 erforderliche Ladedruck erzielt werden.

Durch den von der Verbrennungskraftmaschine 2 unabhängigen Antrieb der Druckwellenmaschine 13 können die Betriebsverhältnisse bereits im unteren Drehzahlbereich verbessert werden, wie auch eine optimale Wirkung der Druckwellenmaschine 13 beim Neustart der Verbrennungskraftmaschine 2, also auch bereits in einem niederen Temperaturbereich der Abgase, erreicht wird.

Die über den Luftfilter 5 und die Rohrleitung 6 bei geschlossener Stellung der Regelkappe 14 der Druckwellenmaschine 13 zugeführte Frischluft wird in dieser durch die Druckwirkung der Abgase verdichtet und über eine Ladeluftleitung 27 und gegebenenfalls einen Luftkühler 28, einen Luftsammler 29, der den Einlässen 7 der Zylinder 8 vorgeschaltet ist, zugeführt. In diesem Luftsammler 29 besteht somit ein verdichtetes Ladeluftpotential für die Befüllung der Zylinder 8, wodurch in diesen eine höhere Verdichtung und bessere Verwirbelung des eingespritzten Betriebsstoffes erreicht wird.

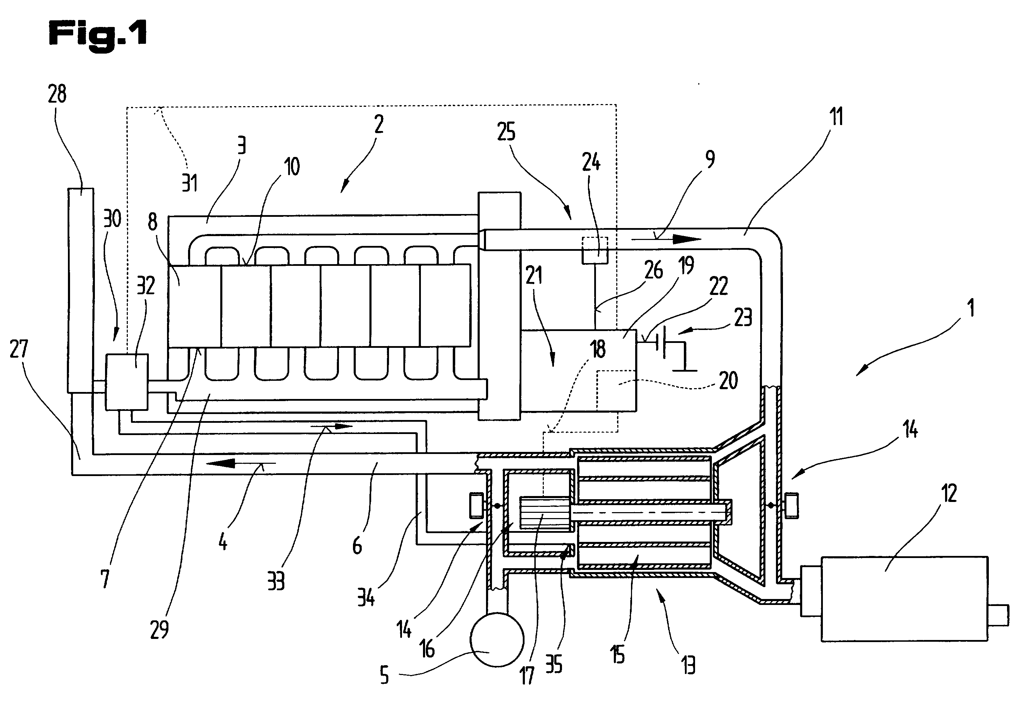

In Strömungsrichtung der Verbrennungsluft ist zwischen dem Luftkühler 28 und dem Luftsammler 29 eine Ladeluftregelvorrichtung 30 angeordnet, die über eine Steuerleitung 31 mit der Regeleinrichtung 19 leitungsverbunden ist. Die Ladeluftregelvorrichtung 30 wird z.B. durch ein schaltbares Steuerventil 32 gebildet, das einen Teilstrom - gemäß Pfeil 33 - von der dem Luftsammler 29 zugeführten Verbrennungsluft abzweigt und diesen über eine Rückführleitung 34 der Druckwellenmaschine 13, insbesondere einem Registerzyklus 35 niederdruckseitig zuleitet. Da die Auslegung der Druckwellenmaschine 13 auf ein höheres als von der Verbrennungskraftmaschine 2 benötigtes Fördervolumen an Verbrennungsluft ausgelegt ist, kann durch diesen abgezweigten und rückgekühlten, vorverdichteten Teilstrom bei Bedarf eine Voraufladung der Druckwellenmaschine 13 erfolgen, durch die eine Anhebung des Druckpotentials erreicht wird. In der Darstellung von Fig. 1 ist das erfindungswesentliche Merkmal nicht gezeigt, so daß diese Figur nicht zur Erfindung gehört. Die Fig. 1 dient jedoch zur Erklärung des allgemeinen Aufbaus von Aufladeeinrichtungen.

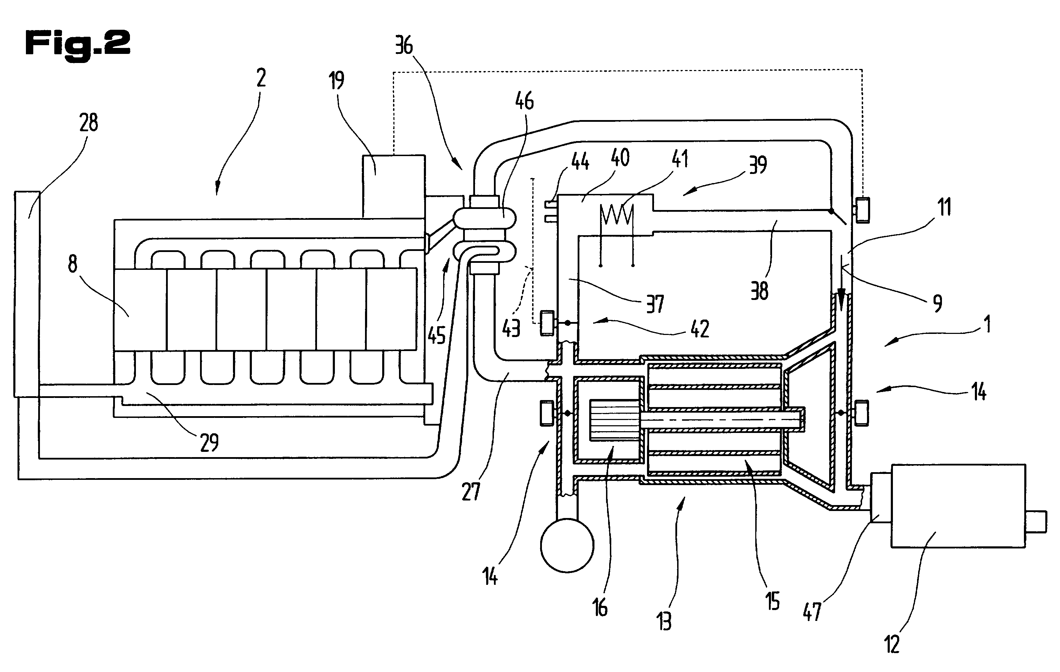

Das gleiche gilt für die Fig. 2, in der eine weitere Ausführung der Aufladeeinrichtung 1 einer Verbrennungskraftmaschine 2 gezeigt ist. In der nachfolgenden Beschreibung werden für bereits in der vorhergehenden Beschreibung enthaltene gleichen Elemente dieselben Bezugszeichen verwendet. Bei dieser Ausführung wird eine zweistufige Aufladung der Verbrennungskraftmaschine 2 dadurch erreicht, daß zu der Druckwellenmaschine 13 in Serie ein Aufladeaggregat 36, bekannt als "Turbolader", angeordnet ist.

Des weiteren ist bei dieser Ausführung zu der Druckwellenmaschine 13 über Rohrleitungen 37, 28 eine Heizeinrichtung 39 parallel geschaltet. Diese Heizeinrichtung 39 weist z.B. einen Wärmetauscher 40 und eine Heizquelle 41 z.B. ein elektrisches Heizregister, Kraftstoffbrenner, etc. auf, wobei im Wärmetauscher 40 diesen durchströmende Luft bei Betrieb der Heizeinrichtung 39 erhitzt wird. Die Zufuhr der Luft zur Heizeinrichtung 39 erfolgt dabei über die Rohrleitung 37, die in Strömungsverbindung mit der Ladeluftleitung 27 steht und die Abführ der in der Heizeinrichtung 39 erhitzten Luft erfolgt in die Abgasleitung 11 und zwar in Strömungsrichtung des Abgases - gemäß Pfeil 9 - vor dessen Zuführung zum Zellrotor 15 der Druckwellenmaschine 13. Über Regelklappen 42, die über Steuerleitungen 43 mit der Regeleinrichtung 19 in Leitungsverbindung stehen, ist ein Zu- und Abschalten des Strömungsverlaufes für die Heizeinrichtung 39 möglich.

Die Heizeinrichtung 39 kann weiters, wie schematisch dargestellt, über ein Rohrleitungssystem 44 mit der Verbrennungskraftmaschine 2 in Leitungsverbindung stehen, um ein Vorwärmen dieser zur Verbesserung der Kaltstarteigenschaften vornehmen zu können. Selbstverständlich kann diese als Standheizung ausgelegte Heizeinrichtung 39 für unterschiedliche Heizzwecke im Rahmen des Betriebes, z.B. eines Kraftfahrzeuges mit der Verbrennungskraftmaschine 2, verwendet werden. Mittels der Heizeinrichtung 39 ist es in Verbindung mit dem über die Antriebsvorrichtung 16 eigenständig betreibbaren Zellrotor 15 möglich, eine einwandfreie Funktion zur Aufladung der Verbrennungskraftmaschine 2 bereits für den Startvorgang, bei dem die Abgase das für eine Funktion der Druckwellenmaschine 13 erforderliche Temperaturniveau noch nicht aufweisen, zu erreichen. Durch die Zuführung der erhitzten Luft in die Abgase und die eigenständige Drehzahlanpassung des Zellrotors 15, ist das erforderliche Druckniveau für die Ladeluft zu erzielen. Damit werden auch Umweltbeeinträchtigungen durch erhöhten Ausstoß von Emissionen, wie sie speziell beim Kaltstart auftreten, wirkungsvoll vermieden.

Wie weiters der Fig. 2 zu entnehmen, wird die in der Druckwellenmaschine 13 vorverdichtete Ladeluft einem Verdichter 45 des Aufladeaggregates 36 über die Ladeluftleitung 27 zugeführt und nach Durchlaufen dieser zweiten Verdichtungsstufe durch den Luftkühler 28, den Luftsammler 29 der Verbrennungskraftmaschine 2 bzw. dessen Zylindern 8 zugeleitet. Die aufzubringende Energie zum Betreiben des Verdichters 45 wird dabei von einer Abgasturbine 46 aufgebracht, die vom Abgas durchströmt wird, bevor dieses über die Abgasleitung 11 der Druckwellenmaschine 13 bzw. je nach Regelzustand der Regelklappen 14, der Druckwellenmaschine 13 bzw. dem Auspufftopf 12 zugeleitet werden und durch diesen und gegebenenfalls nach Durchströmen eines Katalysators 47 an die Umgebungsluft abgegeben werden.

Mittels dieser zweistufigen Verdichtung in der Druckwellenmaschine 13 und anschließend dem Aufladeaggregat 36 wird im gesamten Drehzahlbereich der Verbrennungskraftmaschine 2 ein optimaler Ladedruck für das Aufladen der Verbrennungskraftmaschine 2 und damit eine exakte Anpassung des Leistungsbereiches an alle Betriebsbedingungen erzielt. Durch diese Optimierung der Leistung wird ein wirtschaftlicher Betrieb der Verbrennungskraftmaschine 2 erreicht, der auch zu einer Reduzierung der Umweltbelastung, wie sie beim Verbrennen fossiler Brennstoffe auftritt, führt.

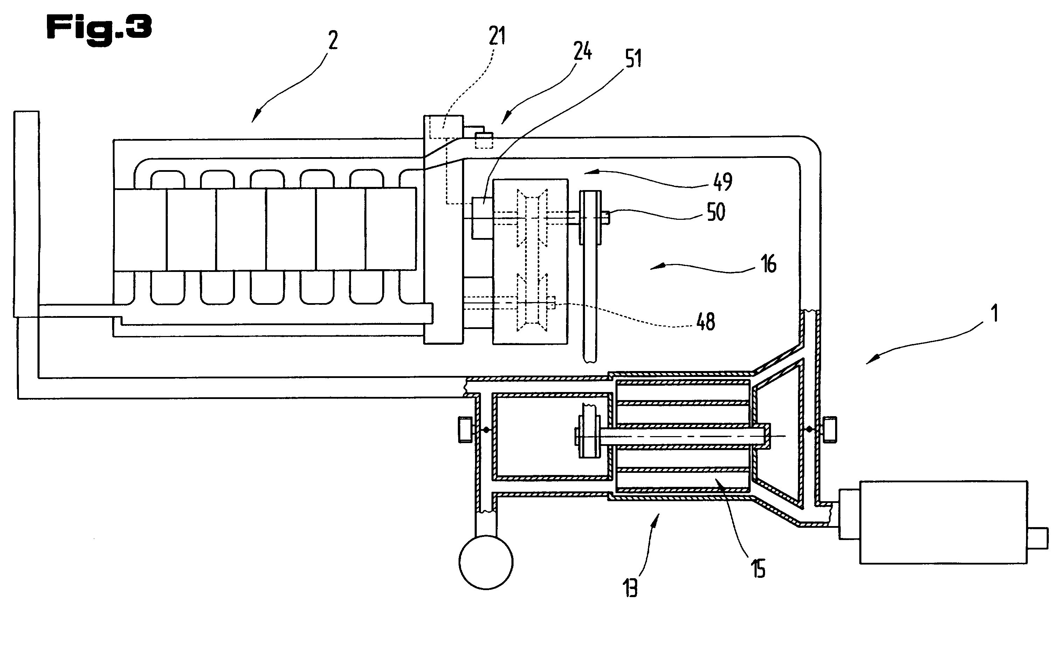

In der Fig. 3 ist eine andere Ausführung der Aufladeeinrichtung 1 einer Verbrennungskraftmaschine 2 gezeigt. Auch hier gilt wie bei Fig. 1 und 2, daß diese Variante die Erfindung nicht explizit zeigt. In der nachfolgenden Beschreibung werden für bereits in der vorhergehenden Beschreibung enthaltene Elemente dieselben Bezugszeichen verwendet. Bei dieser Ausführung erfolgt der Antrieb der Druckwellenmaschine 13 über eine Antriebswelle 48 der Verbrennungskraftmaschine 2, z.B. einem Nebenantrieb, und über ein drehzahlregelbares Zwischengetriebe 49, mit dem die Druckwellenmaschine 13 in Antriebsverbindung steht. Eine derartige Antriebsverbindung kann z.B. über einen Riementrieb erfolgen, wie dies auch gezeigt ist. Selbstverständlich ist auch eine direkte Koppelung der Druckwellenmaschine 13 mit einer Ausgangswelle 50 des Zwischengetriebes 49 möglich.

Die Regelung der Drehzahl der Druckwellenmaschine 13 bzw. des Zellrotors 15 kann somit in weiten Bereichen unabhängig von der jeweiligen Drehzahl der Verbrennungskraftmaschine 2 erfolgen. Eine derartige Regelung kann wieder abhängig von über die Meßwertgeber 24 ermittelten Parameter der Verbrennungskraftmaschine 2 in der Auswerte- und Steuereinheit 21 erfolgen, die mit einem Stellantrieb 51 des Zwischengetriebes 49 leitungsverbunden ist.

Anstelle der Antriebsvorrichtung 16 mit dem Zwischengetriebe 49 ist eine weitere Möglichkeit zum Antrieb der Druckwellenmaschine 13 mittels eines über ein Druckmedium, z.B. Hydrauliköl beaufschlagten Hydromotor, der mit der Druckwellenmaschine 13 antriebsverbunden ist, denkbar. Eine derartige Antriebslösung ermöglicht es ebenfalls, die Drehzahl der Druckwellenmaschine 13 unabhängig von der Drehzahl der Verbrennungskraftmaschine 2 nach Betriebserfordernissen zu regeln und stellt bei Anlagen, die ein Hydrauliksystem zum Betrieb unterschiedlicher Arbeitsgeräte aufweisen, eine wirtschaftliche Lösung dar.

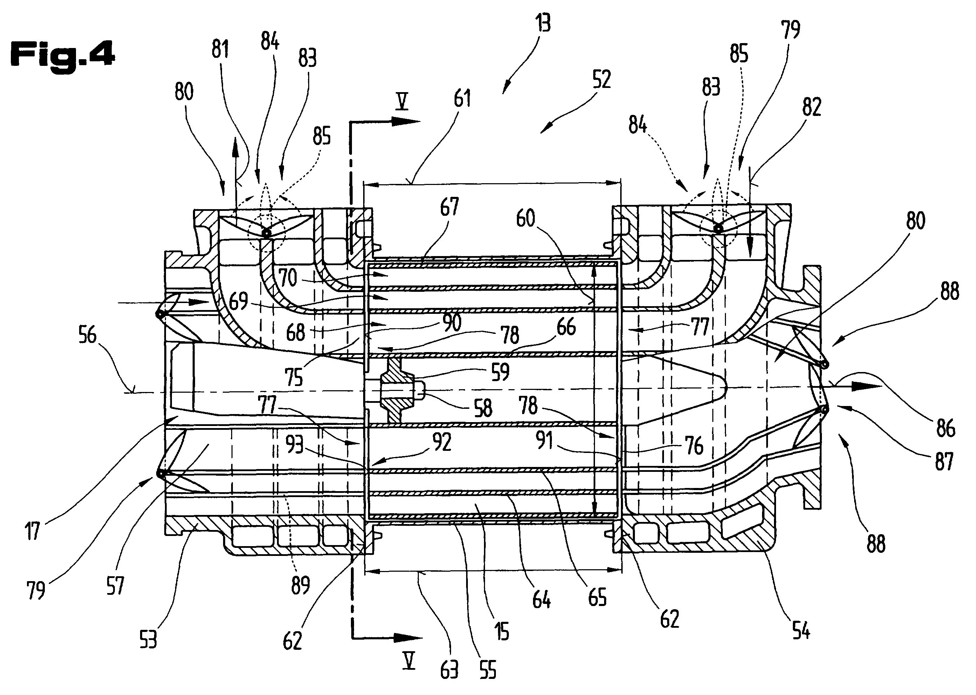

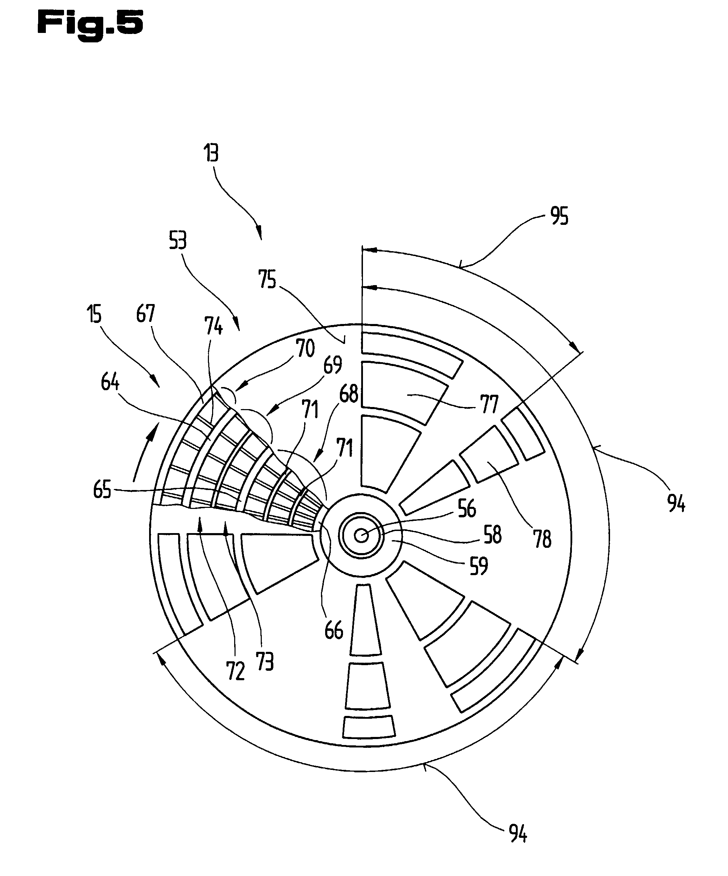

In den Fig. 4 und 5 ist eine weitere Ausbildung der Druckwellenmaschine 13 gezeigt, wobei für die bereits in den vorhergehenden Figuren beschriebenen Begriffe die gleichen Bezugszeichen gewählt werden. In diesen Figuren sind die erfindungswesentlichen Merkmale dargestellt.

Ein Gehäuse 52 der Druckwellenmaschine 13 ist im wesentlichen dreiteilig ausgebildet und weist ein Ladeluft-Stirngehäuse 53, ein Abgas-Stirngehäuse 54 und einen diese voneinander distanzierenden Gehäuseteil 55 auf. Der Gehäuseteil 55 ist an entgegengesetzten Stirnenden flanschartig zur Befestigung des Ladeluft-Stirngehäuses 53 und Abgas-Stirngehäuses 54 ausgebildet. Das Gehäuse 52 ist dabei bevorzugt durch Spritzgußteile, Druckgußteile, etc. gebildet.

Im Ladeluft-Stirngehäuse 53 ist konzentrisch zu einer Längsmittelachse 56 der Druckwellenmaschine 13, ein den Elektromotor 17 ausbildendes Motorgehäuse 57 angeordnet. Eine Motorwelle 58 ragt in den Gehäuseteil 55 und ist mit einer Nabe 59 des Zellrotors 15 drehfest gekuppelt und über die Motorwelle 58 gegenüber dem Gehäuse 52 drehbeweglich positioniert und über den Elektromotor 17 drehbeweglich gelagert. Eine derartige Ausbildung wird auch als fliegende Anordnung bezeichnet und bringt insofern Vorteile, als Längenänderungen des Zellrotors 15, die durch wechselnde Wärmebelastungen entstehen, keine Verspannung bewirken, wie sie bei einer beidseitigen Lagerung auftreten würden.

Ein Innendurchmesser 60 des Gehäuseteils 55 ist in etwa gleich einer Distanz 61 zwischen einander entgegengesetzt angeordneten Stirnflächen 62 des Gehäuseteils 55, der damit einer Länge 63 des Gehäuseteils 55 entspricht. Der Zellrotor 15 ist durch konzentrisch zur Längsmittelachse 56 angeordnete rohrförmige Registerwände 64, 65, die zwischen einem die Nabe 59 umfassenden Innenrohr 66 und einem dem Zellrotor 15 am Außenumfang umfassenden Mantelrohr 67 angeordnet sind, in z.B. drei Verdichterregister 68, 69, 70 unterteilt. Diese Verdichterregister 68, 69, 70 sind nun weiters, wie am Beispiel des das Innenrohr 66 unmittelbar umfassende Verdichterregister 68 gezeigt, durch z.B. eine konzentrisch zur Längsmittelachse 56 verlaufende rohrförmige Flutenwand 71 in Fluten 72, 73 unterteilt. In zur Längsmittelachse 56 radialer Richtung verlaufend, weist der Zellrotor 15 stegartige Zellenwände 74 auf, über die die Registerwände 64, 65 und Flutenwand 71 zwischen dem Innenrohr 66 und dem Mantelrohr 67 positioniert und mit diesen bewegungsfest verbunden sind.

Die Stirnflächen 62 können wahlweise als Planflächen aber gegebenenfalls auch als teilweise sich überlappende Dichtflächen ausgebildet sein, um damit einen sogenannten Labyrinthspalt zu erzielen, der einer Strömung einen hohen Widerstand entgegensetzt und temperaturbedingte Längenänderungen des Zellrotors 15 zuläßt.

In das Ladeluft-Stimgehäuse 53 und das Abgas-Stimgehäuse 54 in Richtung des Gehäuseteils 55 begrenzenden Stirnwänden 75, 76 sind jedem der Verdichterregister 68, 69, 70 zugeordnet, zumindest je eine Einlaßöffnung 77 und je eine Auslaßöffnung 78 angeordnet. In dem, wie insbesondere in Fig. 5 ersichtlich, gezeigten konkreten Ausbildungsbeispiel sind jedem der Verdichterregister 68, 69, 70 drei in Umfangsrichtung gleichmäßig verteilt angeordnete Einlaßöffnungen 77 zugeordnet und um einen Versetzungswinkel je eine der Auslaßöffnungen 78 zugeordnet. Damit wird eine sogenannte mehrzyklische Druckwellenmaschine 13 gebildet, mit der eine auf den jeweiligen Bedarf der Verbrennungskraftmaschine 2 abgestimmte Versorgung mit Ladeluft durch wahlweises Zu- und Wegschalten einzelner Zyklen erreicht. Durch diese Anpaßbarkeit in der Betriebsweise und in Verbindung mit dem unabhängigen Antrieb der Druckwellenmaschine 13 entfallen auch teilweise die aus dem Stand der Technik bekannten Taschen, wodurch auch Platz für die Ausbildung der Zuströmkanäle 79 und Abströmkanäle 80 für den Ladeluftstrom - gemäß Pfeil 81 - und dem Abgasstrom - gemäß Pfeil 82 - erreicht wird.

Wie weiters gezeigt, weist das Ladeluft-Stirngehäuse 53 in den hochdruckseitig angeordneten und jedem der Verdichterregister 68, 69, 70 zugeordneten Abströmkanälen 80 für den Ladeluftstrom - gemäß Pfeil 81 - Schaltorgane 83, z.B. Klappen, auf, wie sie auch im Abgas-Stirngehäuse 54 in den hochdruckseitig angeordneten Zuströmkanälen 79 für den Abgasstrom - gemäß Pfeil 82 - vorgesehen sind. Damit wird eine wahlweise Zu- und Abschaltung der einzelnen Verdichterregister 68, 69, 70 erreicht, die in Verbindung mit Klappenbetätigungsvorrichtungen 84, z.B. Elektromagnete 85, abhängig von vorgegebenen Parametern der Verbrennungskraftmaschine 2 und über die bereits erwähnte Regeleinrichtung 19 betrieben werden. Dabei werden die im Hochdruckbereich des Ladeluftstroms - Pfeil 81 - und des Abgasstroms - Pfeil 82 - angeordneten Schaltorgane 83 synchron betrieben.

Vorteilhafterweise weisen auch die niederdruckseitig für den Abgasstrom - gemäß Pfeil 86 - angeordneten Abströmkanäle 80 eine insbesondere durch Rückschlagklappen 87 gebildete Sperreinrichtung 88 auf. Diese Sperreinrichtung 88 kann z.B. auch nur einzelnen der Verdichterregister 68, 69, 70 zugeordnet sein.

Zur Verhinderung der Strömungsverluste sind die Zuströmkanäle 79 und Abströmkanäle 80 zur Versorgung der Verdichterregister 68, 69, 70 strömungsgünstig ausgebildet und verlaufen im Ladeluft-Stirngehäuse 53 und Abgas-Stirngehäuse 54 spiralenförmig durch Trennwände 89 getrennt.

In den Stirnwänden 75, 76 sind gegebenenfalls auf den dem Zellrotor 15 zugewandten Oberflächen 90, 91, konzentrisch zur Längsmittelachse 56 verlaufend, Dichtungsanordnungen 92 angeordnet, die mit Stirnkanten 93 der Registerwände 64, 65 des Innenrohrs 66 und des Mantelrohres 67 zusammenwirken und die Verdichterregister 68, 69, 70 voneinander strömungsmäßig trennen. Durch diese Dichtungsanordnungen 92 ist es in Verbindung mit den Schaltorganen 93 möglich, jedes der Verdichterregister 68, 69, 70 einzeln oder gemeinsam zu betreiben.

Eine derartige Dichtungsanordnung 92 kann aber auch bei sorgfältiger Ausbildung der Bauteile und deren Abstimmung aufeinander, d.h. durch Ausbildung geringst möglicher Distanzen zwischen den feststehenden Bauteilen und dem rotierenden Zellrotor 15, entfallen.

In einer bevorzugten Ausführungsform wird der kreisringförmige durch das Innenrohr 66 und das Mantelrohr 67 begrenzte Flächenanteil im Verhältnis 40% : 40% : 20% durch die Registerwände 64, 65 aufgeteilt. Dabei ist es z.B. möglich, daß die Beaufschlagung des das Innenrohr 66 unmittelbar umgebenden Verdichterregister 68 in Abhängigkeit von Temperaturdifferenzen zwischen dem Zellrotor 15 und dem Gehäuse 52 erfolgt, um unterschiedliche temperaturbedingte Ausdehnungen zu vermeiden und damit einen Ausgleich im Axialspiel zu erreichen.

Wie der Darstellung der Schaltorgane 83 - in strichlierten Linien gezeigt - zu entnehmen ist, werden diese z.B. durch einzeln fernbetätigbare Klappen gebildet. Je nach Stellung dieser Klappen können dabei im konkreten Ausführungsbeispiel die Verdichterregister 68, 69 einzeln oder gemeinsam ab- bzw. zugeschaltet werden. Selbstverständlich können derartige Schaltorgane 83 auch für sämtliche in der Druckwellenmaschine 13 vorgesehenen Verdichterregister 68, 69, 70 vorgesehen sein, wobei deren Anordnung sowohl hochdruck- und/oder niederdruckseitig im Ladeluft-Stirngehäuse 53 und/oder Abgas-Stirngehäuse 54 oder eigenen Schaltgehäusen erfolgen kann.

Die Ausbildung der Schaltorgane 83 bzw. deren Klappenbetätigungsvorrichtungen 84 können auch derart ausgebildet sein, daß zwischen einer Sperr- und Offenstellung jede beliebige Zwischenstellung einstellbar ist und damit die Schaltorgane 83 zur Erzielung von Drosselschaltungen einsetzbar sind. Damit ist z.B. auch eine interne Abgasrückführung in Form eines Strömungskurzschlusses zu verwirklichen.

Wie nun weiters der Fig. 5 zu entnehmen, ist auf der Motorwelle 58 über die Nabe 59 der Zellrotor 15 drehfest angeordnet. Der Zellrotor 15 weist das Innenrohr 66 und das Mantelrohr 67 auf und zwischen diesen die Registerwände 64, 65, die den Zellrotor 15 in radialer Richtung in die Verdichterregister 68, 69, 70 unterteilen. Beispielsweise ist das Verdichterregister 68 dreiflutig ausgebildet, wobei die Fluten durch die konzentrisch zur Längsmittelachse 56 verlaufenden Flutenwände 71 getrennt sind. In radialer Richtung verlaufen die stegartigen Zellwände 74, die den Zellrotor 15 in Zellen unterteilen und die mechanische Verbindung zwischen dem Innenrohr 66 und dem Mantelrohr 67 und den Registerwänden 64, 65 und den Flutenwänden 71 herstellen. Eine mögliche Ausbildung des Zellrotors 15 besteht in einer Blech-Schweißkonstruktion. Andererseits ist aber auch eine Druckgußausführung möglich. Wie bekannt ist es weiters möglich, Oberflächen der Bauteile für den Zellrotor 15 mit katalytischem Material zu beschichten, wodurch eine Reduzierung des Schadstoffausstoßes beim Betrieb der Druckwellenmaschine 13 erreicht wird. Die weiteren Verdichterregister 69, 70 können weiters einflutig oder auch mehrflutig - wie gezeigt - ausgebildet sein.

In der dem Zellrotor 15 zugewandten Stirnwand 75 des Ladeluft-Stirngehäuses 53, sind in radialer Richtung zueinander beabstandet die Einlaßöffnungen 77 für die Verdichterregister 68, 69, 70 angeordnet. Zur Erzielung einer dreizyklischen Druckwellenmaschine 13 sind insgesamt drei Gruppen der Einlaßöffnungen 77 jeweils um einen Winkel 94 von 120° zueinander versetzt auf der von der Stirnwand 75 gebildeten Kreisfläche angeordnet. Um einen Versetzungswinkel 95 sind die Auslaßöffnungen 78 angeordnet. Eine Querschnittsfläche der niederdruckseitigen Einlaßöffnungen 77 ist dabei größer als eine Querschnittsfläche der hochdruckseitigen Auslaßöffnungen 78. Die Einlaßöffnungen 77 und Auslaßöffnungen 78 bilden dabei in radialer Richtung verlaufende, wie an sich bekannt, im Druckwellenprozeß miteinander korrespondierende Einlaß- und Auslaßkanten aus.

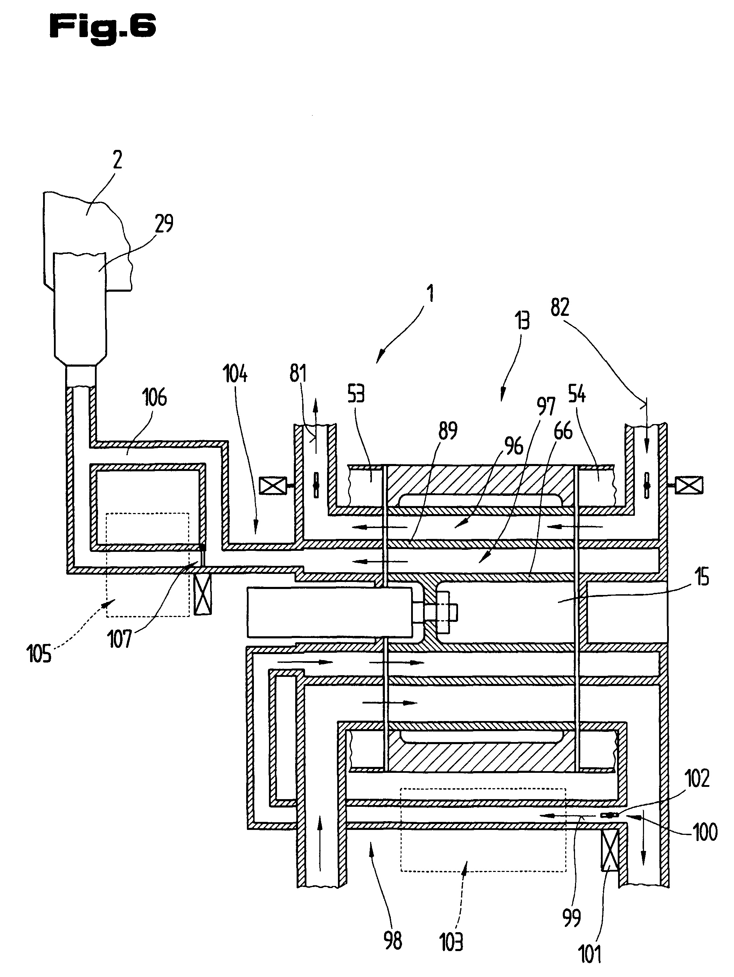

In der Fig. 6 ist nun eine weitere Ausführung der Aufladeeinrichtung 1 mit der Druckwellenmaschine 13 schematisiert gezeigt. Der Zellrotor 15 weist bei dieser Ausführung z.B. zwei Verdichterregister 96, 97 auf, die das Innenrohr 66 konzentrisch umgeben und durch die Trennwand 89 voneinander getrennt sind. Bei dieser Ausführung ist zwischen dem Abgas-Stirngehäuse 54 und dem Ladeluft-Stirngehäuse 53 eine Verbindungsleitung 98 für einen Abgas-Teilstrom - Pfeil 99 - angeordnet. Im Bereich einer Einströmöffnung 100 der Verbindungsleitung 98 ist eine über einen Antrieb 101 fernregelbare Regelklappe 102 angeordnet. Wie weiters durch strichlierte Linien angedeutet, ist es möglich, im Verlauf der Verbindungsleitung 98 einen Zwischenkühler 103 vorzusehen, der es ermöglicht, ein bestimmtes Temperaturniveau für den Abgas-Teilstrom herzustellen. Dieser kann somit bedarfsweise einem der Verdichterregister 96, 97 des Zellrotors 15 zugeführt, verdichtet und über eine Zufuhrleitung 104 an den Luftsammler 29 weitergeleitet werden. Wie weiters durch strichlierte Linien gezeigt, kann im Verlauf der Zufuhrleitung 104 zum Luftsammler 29 ein Ladeluftkühler 105 angeordnet sein, um z.B. das Temperaturniveau des im Zellrotor 15 verdichteten Abgas-Teilstroms abzusenken, damit ein Temperaturanstieg der Ladeluft vermieden wird. Wie weiters dargestellt, ist eine Bypassleitung 106 zur Umgehung des Ladeluftkühlers 105 vorgesehen. Dabei wird eine Regelklappe 107, die ebenfalls fernbedienbar ist, vorgesehen, um wahlweise den Betrieb über den Ladeluftkühler 105 bzw. die Bypassleitung 106 vorzunehmen.

Im Luftsammler 29 kommt es zu einer Vereinigung des Abgas-Teilstroms - gemäß Pfeil 99 - und des Ladeluftstroms - gemäß Pfeil 81 - und weiters zur Zufuhr dieses Gasgemenges zur Verbrennungskraftmaschine 2. Durch die Beimengung eines Abgas-Teilstroms - gemäß Pfeil 99 - zum Ladeluftstrom - gemäß Pfeil 81 - wird, wie bereits bekannt, eine Verschleißverminderung in der Verbrennungskraftmaschine 2 erzielt, aber auch der Schadstoffausstoß minimiert.

Selbstverständlich ist aber auch eine Ausbildung möglich, bei der - entgegen der vereinfacht gezeigten Ausbildung - das Verdichterregister 97 für den Abgas-Teilstrom - gemäß Pfeil 99 - über eine Regeleinrichtung auch wahlweise mit Frischluft oder aber auch mit einem Gemenge an Frischluft und Abgas oder mit einem Gasstrom der Kurbelgehäuseentlüftung beaufschlagbar ist In einem derartigen Fall ist die damit geförderte Teilmenge der Verbrennungskraftmaschine 2 unter Umgehung des Luftkühlers 28 zuzuführen, damit Verschmutzungen im Luftkühler 28 vermieden werden.

Weiters ist auch vorstellbar, eines der Verdichterregister 96, 97 bzw. der in den vorhergehenden Ausführungsbeispielen beschriebenen Verdichterregister 68, 69, 70 zur Entspannung von vorgekühlter Ladeluft zu nutzen und diese Kaltluft z.B. einer integrierten Klimaanlage zuzuführen und für die Kühlung eines mit der erfindungsgemäßen Aufladeeinrichtung 1 versehenen Fahrzeuges, insbesondere einer Fahrzeugkabine, zu verwenden.

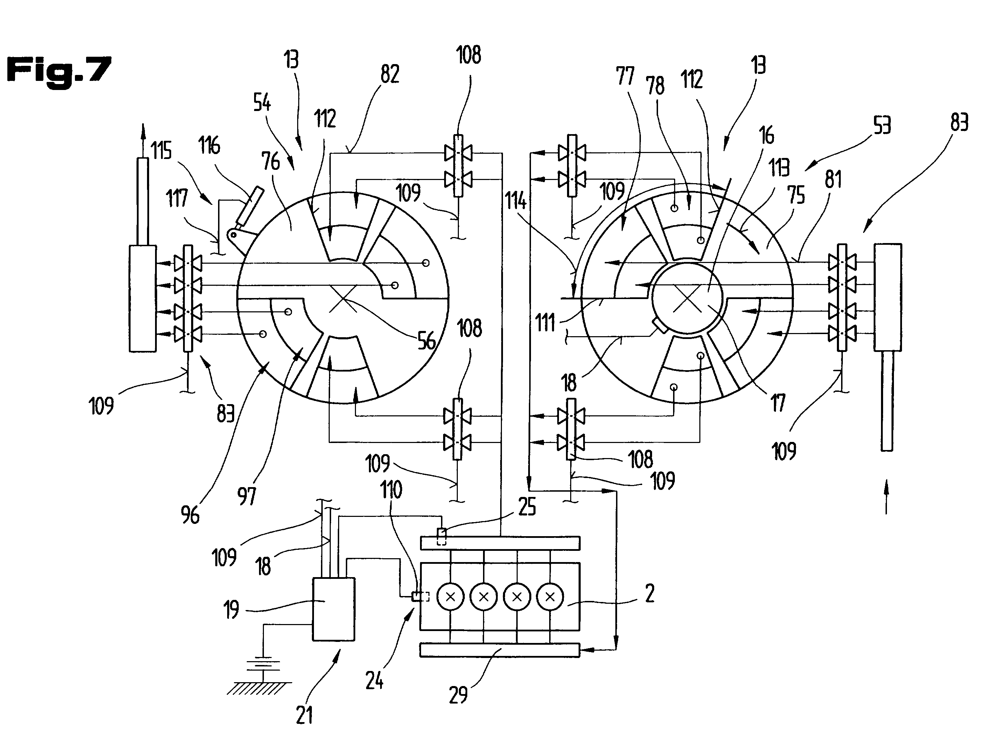

In der Fig. 7 ist eine schematische Darstellung der erfindungsgemäßen Aufladeeinrichtung 1 mit der Druckwellenmaschine 13 gezeigt. Dabei wurden die Ansichten auf die entgegengesetzten Stirnenden der Druckwellenmaschine 13 bzw. auf die Stirnwände 75, 76 nebeneinander dargestellt. Im gezeigten Ausführungsbeispiel handelt es sich um eine zweizyklische Druckwellenmaschine 13 mit den Verdichterregistern 96, 97. Die rechte Abbildung zeigt die Ansicht auf die Stirnwand 75 des Ladeluft-Stirngehäuses 53 und die linke Abbildung die Stirnwand 76 des Abgas-Stirngehäuses 54. Auf der Stirnwand 75 ist die Antriebsvorrichtung 16, z.B. der Elektromotor 17, für den von der Verbrennungskraftmaschine 2 unabhängigen Antrieb der Druckwellenmaschine 13 angeordnet.

Jeder Zyklus und jedes der Verdichterregister 96, 97 ist in einer Einzelschaltung oder auch in einer Gruppenschaltung über die sowohl im Zuluftbereich wie auch im Abgasbereich angeordneten Schaltorgane 83 zu- oder wegschaltbar. Die Schaltorgane 83 sind sowohl den Einlaßöffnungen 77 wie auch den Auslaßöffnungen 78 vor- bzw. nachgeordnet. Diese Schaltorgane 83 bzw. deren Antriebe wie z.B. Elektromagnete 108 sind über Steuerleitungen 109 mit der Regeleinrichtung 19 der Verbrennungskraftmaschine 2 verbunden. Weiters ist mit der Regeleinrichtung 19 mit der Leitung 18 die Antriebsvorrichtung 16 verbunden. Mittels der in der Regeleinrichtung 19 vorgesehenen Auswerte- und Steuereinheit 21 werden die Schaltvorgänge der Schaltorgane 83 ausgelöst, wobei die dazu erforderlichen Informationen von den Meßwertgebern 24, z.B. dem Thermofühler 25, für die Temperatur des Abgases und einem Drehzahlsensor 110, der die Drehzahl der Verbrennungskraftmaschine 2 feststellt, ermittelt.

Die Einlaßöffnungen 77 und Auslaßöffnungen 78 bei der dargestellten zweizyklischen Druckwellenmaschine 13 befinden sich jeweils diametral gegenüber, d.h. in einem Winkel von 180° versetzt. Zwischen einer im Druckwellenprozeß korrespondierenden Öffnungskante 111 der Einlaßöffnung 77 für die Ladeluft - gemäß Pfeil 81 - und einer Schließkante 112 für die Auslaßöffnung 78 ist in Rotationsrichtung - gemäß Pfeil 113 - des Zellrotors 15 ein durch eine Bogenlänge 114 gebildeter Versetzungswinkel vorgesehen.

Wie weiters der Fig. 7 zu entnehmen ist, weist diese weitere mögliche Ausführungsform eine um die Längsmittelachse 56 der Druckwellenmaschine 13 mittels einer Antriebsvorrichtung 115, z.B. einen druckbeaufschlagten Stellzylinder 116, oder elektrisch beauftragten Spindeltrieb schwenkbare Anordnung, z.B. des Abgas-Stirngehäuses 54, auf. Diese Antriebsvorrichtung 115 ist über eine Leitung 117 mit der Regeleinrichtung 19 verbunden und bewirkt ausgehend von Parametern der Verbrennungskraftmaschine 2 eine Relativverstellung des Ladeluft-Stirngehäuses 53 und des Abgas-Stirngehäuses 54. Damit ist ein variabler Winkelversatz zwischen den Öffnungskanten 111 der Einlaßöffnung 77 für die Ladeluft und das Abgas nach vorgegebenen Steuerkriterien, die vom jeweiligen Betriebszustand der Verbrennungskraftmaschine 2 abgeleitet werden, möglich. Eine derartige Verstellmöglichkeit ergibt neben dem Betrieb der Druckwellenmaschine 13 mit Abstimmungsdrehzahl durch die von der Verbrennungskraftmaschine 2 unabhängige Antriebsvorrichtung 16 eine exakte Abstimmung bei der Versorgung der Verbrennungskraftmaschine 2 mit vorverdichteter Ladeluft.

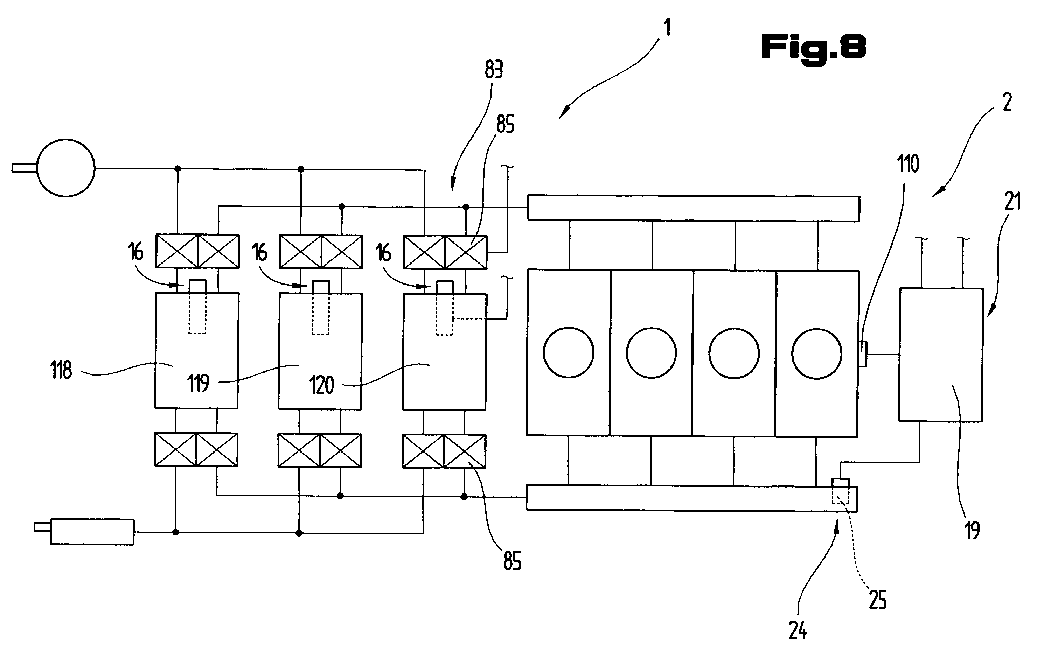

In Fig. 8 ist eine weitere Ausführung der Aufladeeinrichtung 1 für eine Verbrennungskraftmaschine 2 gezeigt. Bei dieser werden beispielsweise drei mit den Antriebsvorrichtungen 16 ausgestattete Druckwellenmaschinen 118, 119, 120 für die Versorgung der Verbrennungskraftmaschine 2 vorgesehen. Die Druckwellenmaschinen 118, 119, 120 sind z.B. auf unterschiedliche Größenordnungen ausgelegt und bilden die Verdichterregister, deren Betriebsweise entsprechend dem jeweiligen Bedarf an die Verbrennungskraftmaschine 2 angepaßt wird. Sie sind wahlweise betreibbar und können sowohl als einzyklische Maschinen oder aber auch als mehrzyklische Maschinen ausgelegt sein. Darüberhinaus besteht die Möglichkeit, diese auch einflutig bzw. mehrflutig auszubilden. In den Leitungssystemen für die Frischluft bzw. Ladeluft und für das Abgas sind den Druckwellenmaschinen 118, 119, 120 die Schaltorgane 83, z.B. Elektromagnet 85, zugeordnet, die mit der Regeleinrichtung 19 leitungsverbunden sind. Wie bereits in den vorhergehenden Figuren Beschrieben, steuert die Regeleinrichtung 19 ausgehend von Parametern der Verbrennungskraftmaschine 2 wie z.B. Temperatur des Abgases, Drehzahl der Verbrennungskraftmaschine 2, Kraftstoffdurchsatz etc. den Betrieb der Druckwellenmaschinen 118, 119, 120. Die dafür erforderlichen Daten werden über die Meßwertgeber 24, z.B. dem Thermofühler 25, Drehzahlsensor 110, etc. ermittelt und in der in der Regeleinrichtung 19 integriert angeordneten Auswerte- und Steuereinheit 21 in Steuerbefehle für die Antriebsvorrichtungen 16 und für die Schaltorgane 83 umgesetzt.

Eine derartige Ausführung der Aufladeeinrichtung 1 ermöglicht sehr kleine, kompakte Baueinheiten für die Druckwellenmaschinen 118, 119, 120 und ermöglicht darüber hinaus eine sehr feinfühlige Anpassung der Versorgung der Verbrennungskraftmaschine 2 mit vorverdichteter Ladeluft.

Eine derartige Ausbildung ist daher insbesondere für Verbrennungskraftmaschinen 2 vorteilhaft, die aufgrund ihrer Einsatzweise, z.B. im mobilen Bereich, große Schwankungen hinsichtlich ihrer Betriebsdrehzahl aufweisen und eine möglichst verzögerungsfreie Reaktion in der Versorgung mit Ladeluft erfolgen soll.

Es wird noch darauf hingewiesen, daß zur besseren Erläuterung der erfindungsgemäßen Druckwellenmaschine 13 in den Darstellungen teilweise ein unproportionaler Maßstab für die einzelnen Elemente gewählt wurde.

Weiters sei noch darauf hingewiesen, daß die technischen Details und die beschriebenen Bauteile im Rahmen des fachmännischen Könnens beliebig abgewandelt werden können. Schlußendlich können auch einzelne Merkmale, der in den einzelnen Ausführungsbeispielen gezeigten und beschriebenen Merkmalskombinationen den Gegenstand eigenständiger, erfindungsgemäßer Lösungen bilden.

## Patentansprüche

1. Aufladeeinrichtung für die Ladeluft einer Brennkraftmaschine, insbesondere eines Kolbenmotors, mit einer mit einer Zuluftleitung für die Ladeluft und einer Abgasleitung für die Verbrennungsgase strömungsverbundenen mehrzyklischen Druckwellenmaschine, mit einem Zuström- und Abströmkanäle (79, 80) aufweisenden Gehäuse, welches aus einem Ladeluft-Stirngehäuse (53), einem Abgas-Stirngehäuse (54) und einem diese voneinander distanzierenden Gehäuseteil (55) besteht, und mit Schaltorganen, die in den Zuströmkanälen des Abgas-Stirngehäuses (54) angeordnet sind und mit zumindest einem über eine Nabe in einer Lageranordnung im Gehäuse drehbar gelagerten Zellrotor (15), der insbesondere mehrere konzentrisch zueinander angeordnete Fluten aufweist, die voneinander getrennte Verdichterregister (68, 69, 70; 96, 97) bilden und der mit einem Drehantrieb verbunden und an eine Regeleinrichtung angeschlossen ist, der zumindest ein Schaltorgan zugeordnet ist, **dadurch gekennzeichnet**, daß in den Abströmkanälen (79, 80) des Ladeluft-Stirngehäuses (53) weitere über die Regeleinrichtung (19) ansteuerbare Schaltorgane (83) angeordnet sind.

2. Aufladeeinrichtung nach Anspruch 1, **dadurch gekennzeichnet**, daß der Zellrotor (15) mit den Zuström- und Abströmkanälen (79, 80) strömungsvcrbunden ist, welche korrespondierend zueinander angeordnete Öffnungs- und Schließkanten (111, 112) aufweisen, die in Rotationsrichtung des Zellrotors (15) bei einer vorbestimmbaren Drehzahl des Zellrotors (15) und einer vorbestimmbaren Abgastemperatur um eine Bogenlänge (114) eines Rotationswinkels gegeneinander versetzt sind, der eine Laufzeit der Druck- oder Saugwellen durch Zellen des Zellrotors (15) bei der vorbestimmten Abgas-Temperatur und Drehzahl der Verbrennungskraftmaschine (2) entspricht und daß bei einer Erhöhung der Drehzahl und/oder der Abgastemperatur der Verbrennungskraftmaschine (2) die Drehzahl des Zellrotors (15) höher und beim Absinken der Drehzahl und/oder Temperatur der Verbrennungskraftmaschine (2) niederer ist.

3. Aufladeeinrichtung nach Anspruch 1, **dadurch gekennzeichnet**, daß der Zellrotor (15) mit den Zuström- und Abströmkanälen (79, 80) strömungsverbunden ist, welche korrespondierend zueinander angeordnete Öffnungs- und Schließkanten (111, 112) aufweisen, die in Rotationsrichtung des Zellrotors (15) bei einer vorbestimmbaren Drehzahl des Zellrotors (15) und einer vorbestimmbaren Abgastemperatur um eine Bogenlänge (114) eines Rotationswinkels gegeneinander versetzt sind, der einer Laufzeit der Druck- oder Saugwellen durch die Zellen des Zellrotors (15) bei der vorbestimmten Abgas-Temperatur und Drehzahl der Brennkraftmaschine (2) entspricht und der bei einer Erhöhung der Drehzahl und/oder der Abgastemperatur der Verbrennungskraftmaschine (2) vergrößert und beim Absinken der Drehzahl der Verbrennungskraftmaschine (2) und/oder Abgas-Temperatur reduziert wird.

4. Aufladeeinrichtung nach einem der Ansprüche 1 bis 3, **dadurch gekennzeichnet**, daß konzentrisch zur Nabe (59) drei durch rohrförmige Registerwände (64, 65) voneinander getrennte Verdichterregister (68, 69, 70; 96, 97) vorgesehen sind, und daß jedem Verdichterregister (68, 69, 70; 96, 97) mindestens eine Flute (72) zugeordnet sind.

5. Aufladeeinrichtung nach Anspruch 4, **dadurch gekennzeichnet**, daß jedem Verdichterregister (68, 69, 70; 96, 97) mindestens zwei, vorzugsweise drei, rotationssymmetrisch in gleichen Winkelabständen angeordnete Einlaßöffnungen (77) im Ladeluft-Stirngehäuse (53) und Auslaßöffnungen (78) im Abgas-Stirngehäuse (54) zugeordnet sind.

6. Aufladeeinrichtung nach einem der Ansprüche 1 bis 5, dadurch gekennzeichnet, daß in zumindest einem Zuströmkanal (79) des Ladeluft-Stirngehäuses (53) und/oder einem Abströmkanal (80) des Abgas-Stirngehäuses (54) ein weiteres Schaltorgan angeordnet ist.

7. Aufladeeinrichtung nach einem der Ansprüche 1 bis 6, **dadurch gekennzeichnet**, daß das Schaltorgan (83) als Strömungsdrossel ausgebildet ist.

8. Aufladeeinrichtung nach einem der Ansprüche 1 bis 7, **dadurch gekennzeichnet**, daß zwischen der Abgasleitung oder dem Abgas-Stirngehäuse (54) und dem Ladeluft-Stirngehäuse (53) eine einen Strömungskanal für einen Abgas-Teilstrom gemäß Pfeil (99) ausbildende Verbindungsleitung (98) angeordnet ist.

9. Aufladeeinrichtung nach Anspruch 7, **dadurch gekennzeichnet**, daß die Verbindungsleitung (98) für den Abgas-Teilstrom über eine Einströmöffnung (100) und eine Ausströmöffnung im Ladeluft-Stirngehäuse (53) mit einem Verdichterregister (97) und einer Zuführleitung (104) für den Abgas-Teilstrom zur Brennkraftmaschine (2) strömungsverbunden ist.

10. Aufladeeinrichtung nach einem der Ansprüche 8 oder 9, **dadurch gekennzeichnet**, daß die Verbindungsleitung (98) und/oder die Zuführleitung (104) für den Abgas-Teilstrom einen Zwischenkühler (103) und/oder einen Ladeluftkühler (105) aufweist.

11. Aufladeeinrichtung nach einem der Ansprüche 1 bis 10, **dadurch gekennzeichnet**, daß eine Antriebsvorrichtung (16) des Zellrotors (15) durch einen unabhängig von der Drehzahl der Brennkraftmaschine (2) betriebbaren Servomotor gebildet ist, der vorzugsweise als Elektromotor ausgebildet ist.

12. Aufladeeinrichtung nach einem der Ansprüche 1 bis 11, **dadurch gekennzeichnet**, daß die Wände des Zellrotors (15) mit einem katalytischen Material beschichtet sind.

13. Aufladeeinrichtung nach einem der Ansprüche 1 bis 12, **dadurch gekennzeichnet**, daß der Druckwellenmaschine (13) ein mit der Abgasleitung (11) der Brennkraftmaschine (2) strömungsverbundener Wärmetauscher (40) einer Heizeinrichtung (39) zugeordnet ist.

14. Aufladeeinrichtung nach einem der Ansprüche 1 bis 13, **dadurch gekennzeichnet**, daß in der Ladeluftleitung (27) ein Luftkühler (28) angeordnet ist und daß zwischen dem Luftkühler (28) und dem Luftsammler (29) eine Ladeluftregelvorrichtung (30) mit einer Rückführleitung (34) für einen Teilstrom der Ladeluft zur Druckwellenmaschine (13) angeordnet ist.

## Claims

1. A supercharging arrangement for the charge air of an internal combustion engine, in particular of a piston engine, with a multi-cycle pressure wave machine which is flow-connected with an air-inlet line for the charge air and an exhaust gas line for the combustion gases, with a housing comprising flow-in and flow-off ducts and consisting of a charge air face housing, an exhaust gas face housing and a housing part which mutually distances the same, and with switching members which are arranged in the flow-in ducts of the exhaust gas face housing, and with at least one cell rotor which is rotatably held by way of a hub in a bearing arrangement in the housing and comprises several paths of flow in particular which are arranged concentrically with respect to one another and form mutually separated compressor registers, and is connected to a rotary drive and to a control device to which at least one switching member is assigned, characterized in that further switching members (83) which are controllable by the control device (19) are arranged in the flow-off ducts (79, 80) of the charge air face housing (53).

2. A supercharging arrangement as claimed in claim 1, characterized in that the cell rotor (15) is flow-connected with the flow-in and flow-off ducts (79, 80) which are provided with correspondingly arranged opening and closing edges (111, 112) which are mutually offset in the rotational direction of the cell rotor (15) by a length of arc (114) of an angle of rotation at a predetermined speed of the cell rotor (15) and a predeterminable exhaust gas temperature, which angle corresponds to a running time of the pressure or suction waves through the cells of the cell rotor (15) at the predetermined exhaust gas temperature and the rotational speed of the internal combustion engine (2) and that on increasing the rotational speed and/or the exhaust gas temperature of the internal combustion engine (2) the rotational speed of the cell rotor (15) is higher and on decreasing the rotational speed and/or the temperature of the internal combustion engine (2) it is lower.

3. A supercharging arrangement as claimed in claim 1, characterized in that the cell rotor (15) is flow-connected with the flow-in and flow-off ducts (79, 80) which are provided with correspondingly arranged opening and closing edges (111, 112) which are mutually offset in the rotational direction of the cell rotor (15) by a length of arc (114) of an angle of rotation at a predetermined speed of the cell rotor (15) and a predeterminable exhaust gas temperature, which angle corresponds to a running time of the pressure or suction waves through the cells of the cell rotor (15) at the predetermined exhaust gas temperature and the rotational speed of the internal combustion engine (2) and is increased on increasing the rotational speed and/or the exhaust gas temperature of the internal combustion engine (2) the rotational speed of the cell rotor (15) and is decreased on decreasing the rotational speed and/or the temperature of the internal combustion engine (2).

4. A supercharging arrangement as claimed in one of claims 1 to 3, characterized in that three compressor registers (68, 69, 70, 96, 97) which encompass the hub (59) in a concentrical manner are provided and that at least one path of flow (72) is assigned to each compressor register (68, 69, 70, 96, 97).

5. A supercharging arrangement as claimed in claim 4, characterized in that each of the compressor registers (68, 69, 70, 96, 97) is assigned at least two, preferably three, inlet openings (77) in the charge air face housing (53) and exhaust gas face housing (54), which inlet openings are arranged in rotational symmetrical manner and are mutually offset by an equal angular pitch.

6. A supercharging arrangement as claimed in one of claims 1 to 5, characterized in that a further switching member is arranged in at least one flow-in duct (79) of the charge air face housing (53) and/or flow-off duct (80) of the exhaust gas face housing (54).

7. A supercharging arrangement as claimed in one of claims 1 to 6, characterized in that the switching member (83) is arranged as a flow throttle.

8. A supercharging arrangement as claimed in one of claims 1 to 7, characterized in that a connecting line (98) is arranged between the exhaust gas line or the exhaust gas face housing (54) and the charge air face housing (53) which forms a flow duct for a partial stream of the exhaust gas pursuant to arrow (99).

9. A supercharging arrangement as claimed in one of claims 1 to 8, characterized in that the connecting line (98) for the partial flow of the exhaust gas is flow-connected via a flow-in opening (100) and a flow-off opening in the charge air face housing (53) with a compressor register (97) and a feed line (104) for the partial flow of the exhaust gas to the internal combustion engine (2).

10. A supercharging arrangement as claimed in one of claims 1 to 9, characterized in that the connecting line (98) and/or feed line (104) for the partial flow of the exhaust gas comprises an intermediate cooler (103) and/or charge air cooler (105).

11. A supercharging arrangement as claimed in one of claims 1 to 10, characterized in that the drive apparatus (16) of the cell rotor (15) is formed by a servomotor which can be operated independent of the rotational speed of the internal combustion engine (2).

12. A supercharging arrangement as claimed in one of claims 1 to 11, characterized in that the walls of the cell rotor are coated with catalytic material.

13. A supercharging arrangement as claimed in one of claims 1 to 12, characterized in that the pressure wave machine (13) is provided with a heat exchanger (40) of a heating device (39) which is flow-connected with the exhaust gas line (11) of the internal combustion engine (2).

14. A supercharging arrangement as claimed in one of claims 1 to 13, characterized in that a charge air control apparatus (30) with a return line (34) for a partial flow, of the charge air to the pressure wave machine (13) is arranged between the air cooler (28) and the air collector (29).

## Revendications

1. Dispositif à suralimentation pour l'air comprimé d'un moteur à combustion interne, en particulier d'un moteur à piston, avec une machine d'ondes de compression à plusieurs cycles associée par flux au conduit d'air amené pour l'air comprimé et au conduit d'échappement pour les gaz de combustion, avec un boîtier pourvu de canaux d'admission et d'écoulement (79, 80) et composé d'un boîtier frontal de l'air comprimé (53), d'un boîtier frontal des gaz d'échappement (54) et d'une partie de boîtier (55) écartant l'un de l'autre et avec des organes de commutation disposés dans les canaux d'admission du boîtier frontal des gaz d'échappement (54) et avec au moins un rotor cellulaire (15) qui est supporté à rotation dans un arrangement de paliers au-dessus d'un moyeu dans le boîtier, qui est pourvu en particulier de plusieurs flux disposés de façon concentrique les uns par rapport aux autres et formant des registres de compresseur (68, 69, 70; 96, 97) séparés les uns des autres, et qui est relié à un entraînement rotatif et raccordé à un équipement de réglage auquel est attribué au moins un organe de commutation, **caractérisé en ce que** d'autres organes de commutation (83) pouvant être commandés par l'équipement de réglage (19) sont disposés dans les canaux d'écoulement (79, 80) du boîtier frontal de l'air comprimé (53).

2. Dispositif à suralimentation conforme à la revendication 1, **caractérisé en ce que** le rotor cellulaire (15) est associé par flux aux canaux d'admission et d'écoulement (79, 80) qui sont pourvus de bords d'ouverture et de fermeture (111, 112) disposés de manière à se correspondre et décalés l'un par rapport à l'autre selon une longueur d'arc (114) d'un angle de rotation dans la direction de rotation du rotor cellulaire (15) à une vitesse de rotation du rotor cellulaire (15) pouvant être déterminée à l'avance et à une température d'échappement pouvant également être déterminée à l'avance, l'angle de rotation correspondant à un temps mis par les ondes de compression ou les ondes d'aspiration pour parcourir les cellules du rotor cellulaire (15) à la température d'échappement et à la vitesse de rotation du moteur à combustion interne (2) prédéfinies et en ce que la vitesse de rotation du rotor cellulaire (15) est plus élevée lorsque la vitesse de rotation et/ou la température d'échappement du moteur à combustion interne (2) est augmentée et qu'elle est plus basse lorsque la vitesse de rotation et/ou la température du moteur à combustion interne (2) est réduite.

3. Dispositif à suralimentation conforme à la revendication 1, **caractérisé en ce que** le rotor cellulaire (15) est associé par flux aux canaux d'admission et d'écoulement (79, 80) qui sont pourvus de bords d'ouverture et de fermeture (111, 112) disposés de manière à se correspondre et décalés l'un par rapport à l'autre selon une longueur d'arc (114) d'un angle de rotation dans la direction de rotation du rotor cellulaire (15) à une vitesse de rotation du rotor cellulaire (15) pouvant être déterminée à l'avance et à une température d'échappement pouvant également être déterminée à l'avance, l'angle de rotation correspondant à un temps mis par les ondes de compression ou les ondes d'aspiration pour parcourir les cellules du rotor cellulaire (15) à la température d'échappement et à la vitesse de rotation du moteur à combustion interne (2) prédéfinies et s'agrandissant quand la vitesse de rotation et/ou la température d'échappement du moteur à combustion interne (2) est augmentée et diminuant quand la vitesse de rotation du moteur à combustion interne (2) et/ou la température d'échappement est réduite.

4. Dispositif à suralimentation conforme à l'une des revendications 1 à 3, **caractérisé en ce que** trois registres de compresseur (68, 69, 70; 96, 97), séparés les uns des autres par des parois de registre (64, 65) tubulaires et disposés de manière concentrique par rapport au moyeu, sont prévus et que au moins un flux (72) est attribué à chaque registre de compresseur (68, 69, 70; 96, 97).

5. Dispositif à suralimentation conforme à la revendication 4, **caractérisé en ce que** au moins deux, de préférence trois ouvertures d'admission (77) dans le boîtier frontal de l'air comprimé (53) et ouvertures d'échappement (78) dans le boîtier frontal des gaz d'échappement, disposées en symétrie de rotation à équidistance angulaire, sont attribuées à chaque registre de compresseur (68, 69, 70; 96, 97).

6. Dispositif à suralimentation conforme à l'une des revendications 1 à 5, **caractérisé en ce que** un organe de commutation supplémentaire est disposé dans au moins un canal d'admission (79) du boîtier frontal de l'air comprimé (53) et/ou dans un canal d'écoulement (80) du boîtier frontal des gaz d'échappement (54).

7. Dispositif à suralimentation conforme à l'une des revendications 1 à 6, **caractérisé en ce que** l'organe de commutation (83) est conçu comme un dispositif d'étranglement de l'écoulement.

8. Dispositif à suralimentation conforme à l'une des revendications 1 à 7, **caractérisé en ce que** un conduit de liaison (98) formant un canal d'écoulement pour un écoulement partiel de gaz d'échappement suivant la flèche (99) est disposé entre le conduit d'échappement des gaz ou le boîtier frontal des gaz d'échappement (54) et le boîtier frontal de l'air comprimé (53).

9. Dispositif à suralimentation conforme à la revendication 7, **caractérisé en ce que** le conduit de liaison (98) pour l'écoulement partiel de gaz d'échappement est associé par flux à un registre de compresseur (97) et à un conduit d'alimentation (104) pour l'écoulement partiel de gaz d'échappement vers le moteur à combustion interne (2) par une ouverture d'admission (100) et une ouverture d'écoulement dans le boîtier frontal de l'air comprimé (53).

10. Dispositif à suralimentation conforme à l'une des revendications 8 ou 9, **caractérisé en ce que** le conduit de liaison (98) et/ou le conduit d'alimentation (104) pour l'écoulement partiel de gaz d'échappement est pourvu d'un refroidisseur intermédiaire (103) et/ou d'un refroidisseur de l'air comprimé (105).

11. Dispositif à suralimentation conforme à l'une des revendications 1 à 10, **caractérisé en ce que** un mécanisme de commande (16) du rotor cellulaire (15) est formé par un moteur auxiliaire qui peut être actionné indépendamment de la vitesse de rotation du moteur à combustion interne (2), ledit moteur auxiliaire étant de préférence conçu comme un moteur électrique.

12. Dispositif à suralimentation conforme à l'une des revendications 1 à 11, **caractérisé en ce que** les parois du rotor cellulaire (15) sont revêtues d'un matériel catalytique.

13. Dispositif à suralimentation conforme à l'une des revendications 1 à 12, **caractérisé en ce que** un échangeur thermique (40) d'un dispositif de chauffage (39), associé par flux au conduit d'échappement des gaz (11) du moteur à combustion interne (2), est attribué à la machine d'ondes de compression (13).

14. Dispositif à suralimentation conforme à l'une des revendications 1 à 13, **caractérisé en ce que** un refroidisseur d'air (28) est disposé dans le conduit de l'air comprimé (27) et qu'un dispositif régulateur de l'air comprimé (30) équipé d'un conduit de refoulement (34) pour un écoulement partiel de l'air comprimé vers la machine d'ondes de compression (13) est disposé entre le refroidisseur d'air (28) et l'accumulateur d'air (29).
